# EUROPEAN PATENT APPLICATION

(11) **EP 4 628 374 A1**
(43) Date of publication of application: **08.10.2025**
(21) Application number: 24168767.2
(22) Date of filing: 05.04.2024
(51) Int. Cl.: B60T 13/68

(54) **COMPUTER SYSTEM FOR INFLATING A TRAILER EQUIPMENT AND ASSOCIATED VEHICLE, METHOD, COMPUTER PROGRAM PRODUCT AND NON-TRANSITORY COMPUTER-READABLE STORAGE MEDIUM**

(71) Applicant: Volvo Truck Corporation, 405 08 Göteborg (SE)
(72) Inventor: NEWTON, Robert, GREENSBORO, 27401-223 (US); SUBRAMANIAN, Chidambaram, DURHAM, 27705 (US)
(74) Representative: Lavoix

(57) **Abstract**

A computer system (100), for inflating a trailer equipment included in a trailer, comprising processing circuitry (102) configured to:
- receive data including at least a trailer connection status and a trailer load;
- determine if a vehicle comprising the trailer and a tractor unit will depart within a predetermined timeframe, based at least on the trailer connection status and the trailer load; and
- if the vehicle is determined to depart within the predetermined timeframe, output an inflation authorization message, to increase the trailer equipment pressure to be equal to or above a departure pressure threshold.

## Description

### TECHNICAL FIELD

The disclosure relates generally to vehicles comprising a tractor unit and a trailer. In particular aspects, the disclosure relates to a computer system for inflating equipment included in a trailer, a vehicle comprising such a computer system and an associated method. The disclosure can be applied to heavy-duty vehicles, such as trucks, and construction equipment, among other vehicle types. Although the disclosure may be described with respect to a particular vehicle, the disclosure is not restricted to any particular vehicle.

### BACKGROUND

In vehicles comprising a tractor unit and a trailer, such as trucks, it is necessary to inflate trailer equipment included in the trailer, for the vehicle to be able to depart and be driven safely by a driver. However, inflating trailer equipment is a time-consuming procedure, which leads to increased downtime, or delayed departure of the vehicle, as it is necessary to wait for the equipment to be fully inflated before the truck can depart. Therefore, there is a need to reduce the downtime caused by the inflation of trailer equipment.

### SUMMARY

According to a first aspect of the disclosure, the invention relates to a computer system, for inflating a trailer equipment included in a trailer, comprising processing circuitry configured to:
- receive data including at least a trailer connection status and a trailer load;
- determine if a vehicle comprising the trailer and a tractor unit will depart within a predetermined timeframe, based at least on the trailer connection status and the trailer load; and
- if the vehicle is determined to depart within the predetermined timeframe, output an inflation authorization message, to increase a trailer equipment pressure to be equal to or above a departure pressure threshold.

The first aspect of the disclosure may seek to reduce the downtime caused by the inflation of the trailer equipment. A technical benefit may include autonomously inflating the trailer equipment, without necessitating for the driver to control the inflation of the trailer equipment, for example from a cabin of the vehicle. This reduces the downtime caused by the inflation of the trailer equipment, as the trailer equipment can be inflated while the driver is away from the vehicle and/or is not yet ready to depart. The vehicle can therefore be driven as soon as the driver is ready, without having to wait for the equipment to be inflated.

Optionally in some examples, including in at least one preferred example, the processing circuitry is further configured to receive a trailer equipment pressure P and to send a feedback message indicating successful inflation when the trailer equipment pressure is equal to or above the departure pressure threshold. A technical benefit may include informing the driver, or more generally, a user of the vehicle whether or not the trailer equipment has been successfully inflated, which may allow the user to better plan his or her time to depart as soon as the trailer equipment is inflated, thus further reducing downtime.

Optionally in some examples, including in at least one preferred example, the processing circuitry is further configured to output the inflation authorization message if:
- the trailer connection status indicates that the trailer is connected to the tractor unit included in the vehicle; and
- the trailer load is below a maximum load threshold.

A technical benefit may include ensuring that the inflation of the trailer equipment can be performed, and if it can be performed, that it is performed in safe conditions.

Optionally in some examples, including in at least one preferred example, the processing circuitry is further configured to:
- receive data including an engine status of an engine included in the tractor unit, a location of the vehicle, a current time and date, a total drive time before break and a supply pressure;
- determine if the vehicle will depart within the predetermined timeframe further based on the location of the vehicle, on the current time and date and on the total drive time before break; and
- output an inflation authorization message if:
   o the engine status of the tractor unit indicates that the engine is off; and
   o the supply pressure is above or equal to a minimal supply pressure threshold, in addition to the previous conditions being met.

A technical benefit may include checking that the inflation can be performed, and is performed in safe conditions. An additional technical benefit may include providing additional relevant information that may improve the accuracy of the determination of the departure of the vehicle.

Optionally in some examples, including in at least one preferred example, the processing circuitry is configured to determine if the vehicle will depart within the predetermined timeframe by estimating a departure time and calculating if a duration between the departure time and the current time is below or equal to the predetermined timeframe. A technical benefit may include providing a manner to determine if the vehicle will depart that does not require the processing circuitry to run continuously. Indeed, once the departure time is estimated, it is possible to wait until the duration between the departure time and the current time is below or equal to the predetermined timeframe, without having to estimate again the departure time.

Optionally in some examples, including in at least one preferred example, the processing circuitry is further configured to:
- receive data including a speed of the vehicle; and
- if the speed of the vehicle is above or equal to a maximal speed threshold after the inflation authorization message has been output, output a deflation message, to decrease the trailer equipment pressure to be equal to or below a security pressure threshold.

A technical benefit may include improving safety while the vehicle is being inflated, by stopping and reversing the inflation process if the vehicle starts moving.

Optionally in some examples, including in at least one preferred example, the processing circuitry is further configured to determine if the vehicle will depart within the predetermined timeframe via an artificial intelligence model, the data representative of at least of the trailer connection status and the trailer load being input variables of the artificial intelligence model. A technical benefit may include improving an accuracy of the determination of the departure of the vehicle, while limiting the computing power.

Optionally in some examples, including in at least one preferred example, the artificial intelligence model is a reinforcement-learning model. A technical benefit may include enabling continuous training of the model, to improve its accuracy.

Optionally in some examples, including in at least one preferred example, the processing circuitry is further configured to receive a manual inflation command and, when the manual command is received, output the inflation authorization message. A technical benefit may include allowing a user of the vehicle to bypass the automatic inflation process if the user so desires, to make the inflation of the trailer equipment more convenient for the user.

According to a second aspect of the disclosure, the invention further relates to a vehicle comprising:
- a trailer, comprising trailer equipment configured to be inflated;
- a tractor unit, configured to be connected to the trailer, the tractor unit comprising a computer system comprising processing circuitry configured to:
   o receive data including at least a trailer connection status and a trailer load;
   o determine if the vehicle will depart within a predetermined timeframe based at least on the trailer connection status and the trailer load;
   o if the vehicle is determined to depart within the predetermined timeframe, output an inflation authorization message,
the tractor unit further comprising an air compressor, configured to inflate the trailer equipment when the inflation authorization message is output to increase a trailer equipment pressure to be equal to or above a departure pressure threshold.

The second aspect of the disclosure may seek to provide a vehicle having a reduced downtime caused by the trailer equipment inflation. A technical benefit may include performing the inflation of the trailer equipment autonomously, to reduce a downtime of the vehicle and increase efficiency.

Optionally in some examples, including in at least one preferred example, the trailer equipment of the trailer comprises park brakes. A technical benefit may include autonomously unlocking the park brakes by inflating the trailer equipment.

Optionally in some examples, including in at least one preferred example, the trailer equipment further comprises service brakes and/or a pneumatic suspension system. A technical benefit may include additional reduction of the downtime before the driver can drive the vehicle, as multiple equipment in the trailer may be inflated at the same time.

Optionally in some examples, including in at least one preferred example, the vehicle further comprises:
- a connection sensor, configured to determine a connection status of the tractor unit and the trailer;
- a load sensor, configured to measure a load of the trailer;
- a trailer equipment pressure sensor, configured to sense the trailer equipment pressure; and
- a speed sensor, configured to sense a speed of the vehicle.

A technical benefit may include measuring data to check if the inflation of the trailer equipment can be performed, and if so, that it is performed in safe conditions.

Optionally in some examples, including in at least one preferred example, the vehicle further comprises:
- an engine, included in the tractor unit;
- an engine sensor, configured to determine an engine status of the engine; and
- an air supply sensor, configured to sense a supply pressure of the air compressor.

A technical benefit may include further checking that the inflation of the trailer equipment can be performed, and is performed in safe conditions.

According to a third aspect of the disclosure, the invention further relates to a computer-implemented method, comprising:
- receiving data including at least a trailer connection status of a trailer and a trailer load, by processing circuitry of a computer system included in a tractor unit;
- determining if a vehicle comprising the trailer and the tractor unit will depart within a predetermined timeframe, based at least on the trailer connection status and the trailer load;
- if the vehicle is determined to depart within the predetermined timeframe, outputting an inflation authorization message; and
- when the inflation authorization message is output, inflating a trailer equipment included in the trailer to increase a trailer equipment pressure to be equal to or above a departure pressure threshold by an air compressor included in the tractor unit.

The third aspect of the disclosure may seek to provide a method to reduce the downtime caused by the inflation of trailer equipment. A technical benefit may include autonomously inflating the trailer equipment, without necessitating for the driver to control the inflation of the trailer equipment. This means that the trailer equipment can be inflated while the driver is away from the vehicle. The vehicle can therefore be driven as soon as the driver is ready, without having to wait for the equipment to be inflated.

Optionally in some examples, including in at least one preferred example, the method further comprises:
- when the trailer equipment pressure is equal to or above the departure pressure threshold, stopping inflation of the equipment by the air compressor; and
- sending a feedback message indicating successful inflation, by the processing circuitry.

A technical benefit may include preventing the trailer equipment from being overly inflated and informing the driver, or more generally, the user of the vehicle whether or not the trailer equipment has been successfully inflated, which may allow the user to better plan his or her time to depart as soon as the trailer equipment is inflated, thus further reducing downtime.

Optionally in some examples, including in at least one preferred example, the data received further includes an engine status of an engine of the tractor unit, a location of the vehicle, a current time and date, a total drive time before break and a supply pressure, by the processing circuitry, and the method further comprises:
- determining if the vehicle will depart within the predetermined timeframe further based on the location of the vehicle, on the time and date and on the total drive time before break by the processing circuitry; and
- outputting an inflation authorization message by the processing circuitry if :
   o the engine status indicates that the engine is off;
   o the supply pressure is equal to or above a minimal supply pressure threshold;
   o the trailer connection status indicates that the trailer is connected to the tractor unit; and
   o the trailer load is below a maximum load threshold.

A technical benefit may include checking that the inflation of the trailer equipment can be performed, and is performed in safe conditions. An additional technical benefit may include providing additional relevant information that may improve the accuracy of the determination of the departure of the vehicle.

Optionally in some examples, including in at least one preferred example, the method further comprises:
- receiving a manual inflation command by the processing circuitry; and
- when the manual inflation command is received, outputting the inflation authorization message by the processing circuitry.

A technical benefit may include allowing the user to bypass the automatic inflation process if the user so desires, to make the inflation of the trailer equipment as convenient as possible for the user.

According to a fourth aspect of the disclosure, the invention further relates to a computer program product comprising program code for performing, when executed by the processing circuitry, the method previously described. The fourth aspect of the disclosure may seek to reduce the downtime caused by the inflation of trailer equipment. A technical benefit may include providing a product which allows autonomous inflation of the trailer equipment, without necessitating for the driver to control the inflation of the trailer equipment, for example from the cabin of the vehicle. This reduces the downtime caused by the inflation of trailer equipment as the trailer equipment can be inflated while the driver is away from the vehicle and/or not yet ready to depart.

According to a fifth aspect of the disclosure, the invention further relates to a non-transitory computer-readable storage medium comprising instructions, which when executed by the processing circuitry, causes the processing circuitry to perform the method previously described. The fifth aspect of the disclosure may seek to reduce the downtime caused by the inflation of trailer equipment. A technical benefit may include providing a storage medium which allows autonomous inflation of the trailer equipment, without necessitating for the driver to control the inflation of the trailer equipment. This reduces the downtime caused by the inflation of trailer equipment as the trailer equipment can be inflated while the driver is away from the vehicle, and/or not yet ready to depart.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary truck according to an example.
**FIG. 2** is a schematic diagram of an exemplary computer system for implementing examples disclosed herein.
**FIG. 3** is a schematic diagram of an exemplary computer system connected to sensors according to an example.
**FIG. 4** is a flow chart of an exemplary method to inflate equipment included in a trailer according to an example.

### DETAILED DESCRIPTION

The detailed description set forth below provides information and examples of the disclosed technology with sufficient detail to enable those skilled in the art to practice the disclosure.

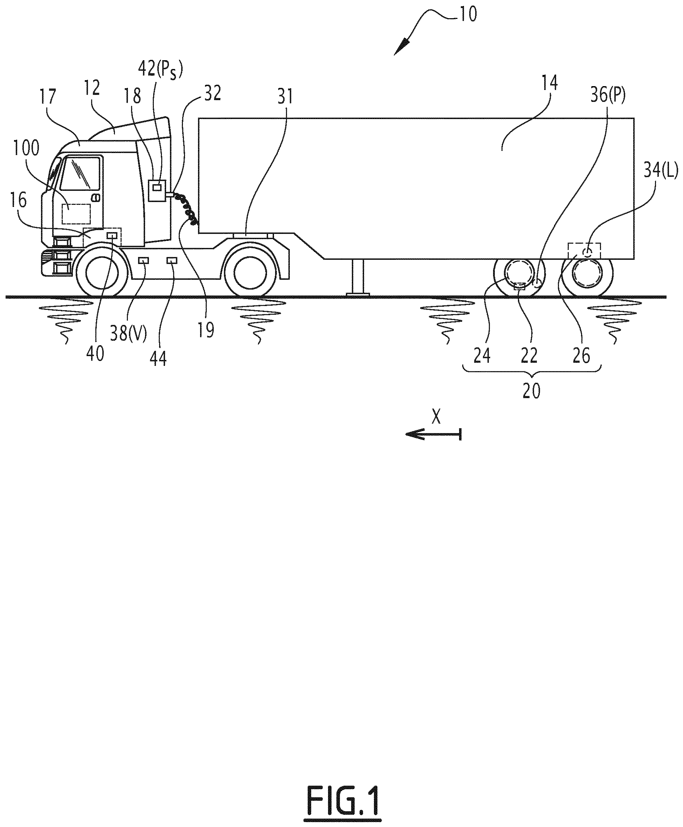

FIG. 1 is an exemplary vehicle 10 according to an example. The vehicle 10 is in the example of figure 1, a truck. The truck 10 comprises a tractor unit 12, also known as "tractor vehicle" or "tractor" and a semi-trailer 14, also known as "trailer", configured to be connected to the tractor unit 12. The tractor vehicle 12 comprises an engine 16, visible in stippled lines on figure 1, and a cab or cabin 17. The engine 16 is located under the cabin 17 in the example of figure 1.

The tractor unit 12 comprises an air compressor 18, which is configured to inflate trailer equipment 20 comprised in the trailer 14. The tractor vehicle 12 may also comprise one or more pneumatic hose(s), in the example of figure 1, one pneumatic hose 19, connected to the trailer 14 and used to provide compressed air from the air compressor 18 to the trailer equipment 20.

According to some examples, the trailer equipment 20 comprises park brakes 22 of the trailer 14. Park brakes 22 are used to prevent untimely movement of the trailer 14 when the truck 10 is parked. When the truck 10 is parked, the park brakes 22 are engaged or locked, and when a driver starts the truck 10, the park brakes 22 are inflated to be disengaged, or unlocked.

In some examples, the trailer 14 further includes service brakes 24, which are used when the truck 10 is moving, and in variant or in complement, a pneumatic suspension system 26.

In some examples, the service brakes 24 and the pneumatic suspension system 26 are part of the trailer equipment 20.

The truck 10 may also comprise a combination of a fifth wheel 31 located on the tractor vehicle 12 and a kingpin, not represented, located on the semi-trailer 14. The tractor vehicle 12 and the trailer 14 are attached to each other by mechanically coupling the fifth wheel 31 to the kingpin.

In some examples, the truck 10 further comprises a plurality of sensors, including a connection sensor 32, a load sensor 34 and a trailer equipment pressure sensor 36. The connection sensor 32 is advantageously located inside the hose 19, and configured to determine a connection status of the tractor unit 12 and the trailer 14, in other words, whether the tractor unit 12 and the trailer 14 are connected or not. In particular, the connection sensor 32 determines whether the tractor unit 12 and the trailer 14 are pneumatically connected. The connection sensor 32 is, for example, a pressure sensor. If the connection sensor 32 senses a pressure equal to or higher than a predetermined threshold, then the tractor unit 12 and the trailer 14 are connected, and if the pressure is lower than the predetermined threshold, then the tractor unit 12 and the trailer 14 are not connected.

In variant, the connection sensor 32 is advantageously located on the fifth wheel 31, or on the kingpin of the trailer 14. In this case, the connection sensor 34 determines whether the tractor unit 12 and the trailer 14 are mechanically connected.

The load sensor 34 is advantageously located in the suspension 26 of the trailer 14. The load sensor 34 is configured to measure a trailer load L. In some examples, the load sensor 34 is a pressure sensor, and is configured to measure the pressure in the suspension 26 and determine the trailer load L, based on the measured pressure.

The trailer equipment pressure sensor 36 is, in some examples, located in the park brakes 22. The trailer equipment pressure sensor 36 is a pressure sensor and is configured to sense a trailer equipment pressure P.

In some examples, the truck 10 further comprises a speed sensor 38. The speed sensor 38 is configured to measure a speed V of the truck 10, and is for example, located on the tractor unit 12.

In some examples, the truck 10 further comprises an engine sensor 40, configured to determine an engine status of the engine 16. In other words, the engine sensor 40 is configured to determine whether the engine 16 is running or not.

In some examples, the truck 10 further comprises an air supply sensor 42, configured to measure a supply pressure Pₛ of the air compressor 18, and may further comprise a yaw-rate sensor 44, configured to measure a yaw rate of the truck 10, or an angle of the truck 10 from a horizontal reference axis X.

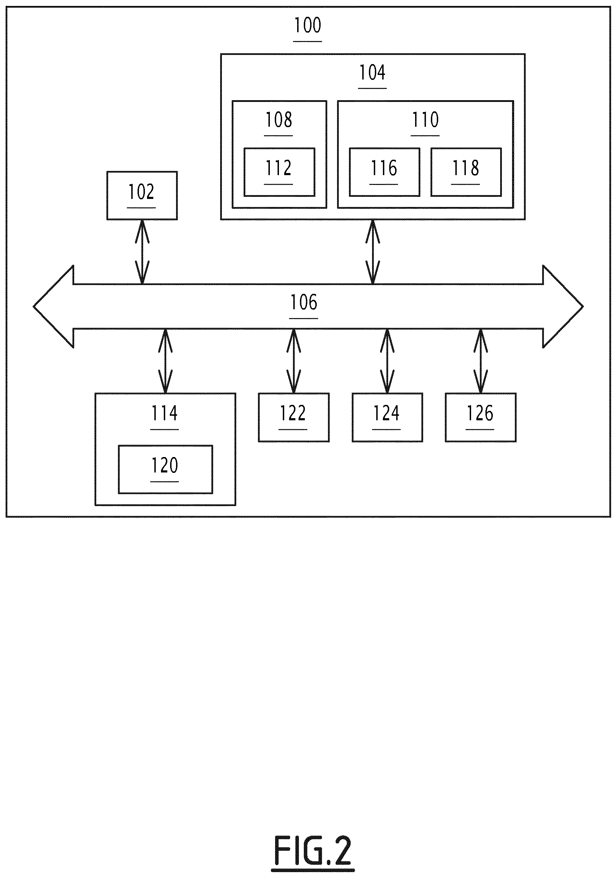

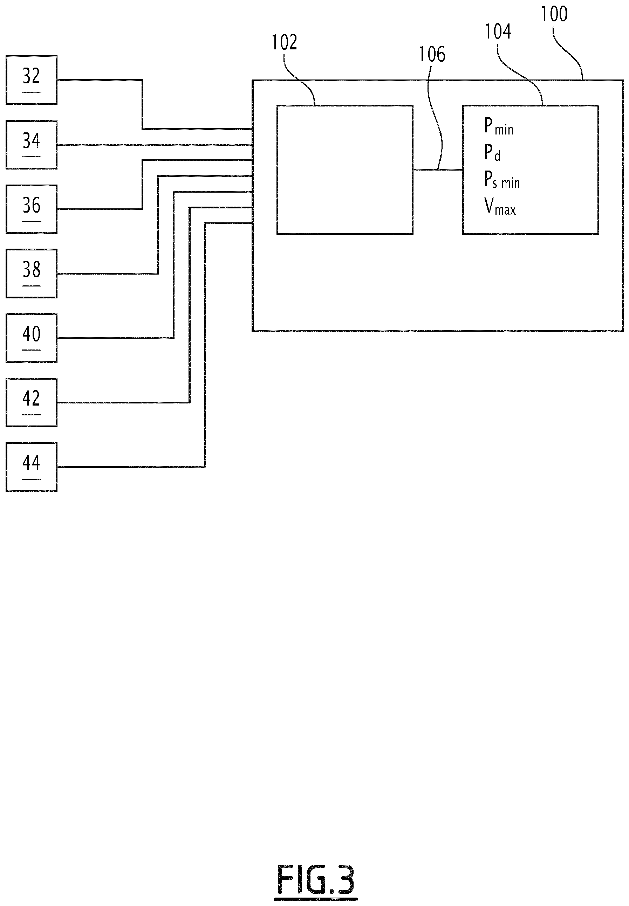

The truck 10, more precisely, the tractor unit 12, further comprises a computer system 100, preferably located in the cab 17. The computer system 100 is better visible in Figures 2 and 3. Figure 2 is a schematic diagram of the computer system 100 for implementing examples disclosed herein. The computer system 100 is adapted to execute instructions from a computer-readable medium to perform these and/or any of the functions or processing described herein. The computer system 100 may be connected, for example networked to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, a control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102, such as processing circuitry including one or more processor devices or control units, a memory 104, and a system bus 106. The computer system 100 may include at least one computing device having the processing circuitry 102. The system bus 106 provides an interface for system components including, but not limited to, the memory 104 and the processing circuitry 102. The processing circuitry 102 may include any number of hardware components for conducting data or signal processing or for executing computer code stored in memory 104. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 106 may be any of one of several types of bus structures that may further interconnect to a memory bus with or without a memory controller, a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processing circuitry 102 for example via a circuit or any other wired, wireless, or network connection, and may include computer code for executing one or more processes described herein. The memory 104 may include non-volatile memory 108 such as read-only memory (ROM), erasable programmable read-only memory (EPROM), electrically erasable programmable read-only memory (EEPROM), etc, and volatile memory 110 such random-access memory (RAM), or any other medium which can be used to carry or store desired program code in the form of machine-executable instructions or data structures and which can be accessed by a computer or other machine with processing circuitry 102. A basic input/output system (BIOS) 112 may be stored in the non-volatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) such as an enhanced integrated drive electronics (EIDE) or serial advanced technology attachment (SATA), for storage, flash memory, or the like. The storage device 114 and other drives associated with computer-readable media and computer-usable media may provide non-volatile storage of data, data structures, computer-executable instructions, and the like.

Computer-code, which is hard or soft coded, may be provided in the form of one or more modules. The module(s) can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program 120 stored on a transitory or non-transitory computer-usable or computer-readable storage medium, for example a single medium or multiple media, such as the storage device 114, which includes complex programming instructions such as complex computer-readable program code to cause the processing circuitry 102 to carry out actions described herein. Thus, the computer-readable program code of the computer program 120 can comprise software instructions for implementing the functionality of the examples described herein when executed by the processing circuitry 102. In some examples, the storage device 114 may be a computer program product for example a readable storage medium storing the computer program 120 thereon, where at least a portion of a computer program 120 may be loadable, for example into a processor for implementing the functionality of the examples described herein when executed by the processing circuitry 102. The processing circuitry 102 may serve as a controller or control system for the computer system 100 that is to implement the functionality described herein.

The computer system 100 may include an input device interface 122 configured to receive input and selections to be communicated to the computer system 100 when executing instructions, such as from a keyboard, mouse, touch-sensitive surface, etc. Such input devices may be connected to the processing circuitry 102 through the input device interface 122 coupled to the system bus 106 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a human-machine interface, a video display unit such as a liquid crystal display (LCD) or a cathode ray tube (CRT). The computer system 100 may include a communications interface 126 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

As shown in figure 3, the computer system 100 is connected to the sensors 32, 34, 36, 38, 40, 42 and 44, and the processing circuitry 102 is configured to receive data including at least the trailer connection status from connection sensor 32 and the trailer load L from load sensor 34. In some examples the processing circuitry 102 is further configured to receive the trailer equipment pressure P from the trailer equipment pressure sensor 36. In some examples the processing circuitry 102 is further configured to receive data including the speed V of the truck 10 from the speed sensor 38, the engine status of the engine 16 from the engine sensor 40, the supply pressure Pₛ from the air supply sensor 42 and the angle of the truck 10 from the yaw-rate sensor 44.

In some examples, the processing circuitry 102 is further configured to receive a location of the truck 10, for example via GPS positioning, a current time and date, and a total drive time before break. The total drive time before break corresponds to a time duration during which the vehicle 10 was driven before parking the vehicle 10.

A method for inflating equipment included in the trailer 14 is now described. The method is implemented by the computer system 100.

The method comprises the processing circuit 102 receiving, at step 200, at least the trailer connection status and the trailer load L, respectively from the connection sensor 32 and from the load sensor 34.

In some examples, the processing circuit 102 further receives the trailer equipment pressure P from the trailer equipment pressure sensor 36. In some examples, the processing circuit 102 further receives the speed V of the truck 10 from the speed sensor 38, the engine status from the engine sensor 40, the supply pressure Pₛ from the air supply sensor 42, the angle of the truck 10 from the yaw-rate sensor 44, the location of the truck 10, the current time and date, and the total drive time before break.

The processing circuitry 102 determines if the truck 10 will depart within a predetermined timeframe, based at least on the trailer connection status and the trailer load L at step 202. By based at least on the trailer connection status and the trailer load L, it is meant that the processing circuitry 102 determines if the truck 10 will depart if the trailer connection status and the trailer load L fulfill specific conditions. For example, the processing circuitry 102 determines that the truck 10 will depart if the trailer connection status indicates that the trailer 14 is connected to the tractor unit 12, and if the trailer load L is above a minimal load.

In some examples, the processing circuitry 102 determines if the truck 10 will depart within a predetermined timeframe at step 202 further based on the location of the truck 10, the current time and date, the total drive time before break and the supply pressure Pₛ. In some examples, the processing circuitry 102 determines if the truck 10 will depart within a predetermined timeframe by estimating a departure time and calculating if a duration between the departure time and the current time is below or equal to the predetermined timeframe. In other examples, the processing circuitry 102 directly determines if the truck 10 will or will not depart in the predetermined timeframe. The timeframe is for example the next ten minutes from the current time.

In some examples, the processing circuitry performs step 202 via an artificial intelligence model. In this case, input variables of the artificial intelligence model comprise at least the trailer connection status and the trailer load L. In some examples the input variables further comprise the location of the truck 10, the current time and date, the total drive time before break and the supply pressure Pₛ.

In some examples, if the processing circuitry 102 determines that the truck 10 will depart within the predetermined timeframe, the processing circuitry 102 outputs a departure message at step 204. If the processing circuitry 102 determines that the truck 10 will not depart within the predetermined timeframe, the processing circuitry 102 does not output a departure message and performs again steps 200 and 202. An iterative process is then implemented.

In some examples, the processing circuitry 102 outputs a standby message instead of not outputting the departure message.

In some examples, if the processing circuitry 102 performs step 202 via an artificial intelligence model, an output variable of the artificial intelligence model may be the departure message or the standby message, which is output if the artificial intelligence model determines that the truck 10 will not depart within the predetermined timeframe.

If the truck 10 is determined to depart within the predetermined timeframe, the processing circuitry 102 outputs an inflation authorization message at step 208. Advantageously, the processing circuitry 102 performs additional analysis of the data received, for example performs security checks, and outputs the inflation authorization message at step 208 only if the analysis is satisfactory, for example if the security checks are successful. Examples of such additional analyses are described in steps C302 to C308, detailed below.

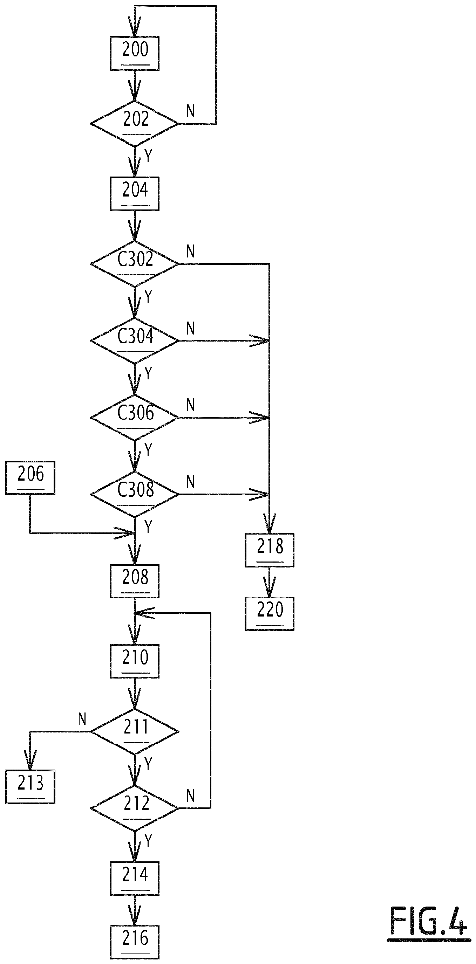

In some examples, the processing circuitry 102 further analyses the data received, and outputs the inflation authorization message at step 208 only if the departure message is output at step 204, and if the analysis is satisfactory as visible in figure 4.

In some examples, to determine whether or not to output the inflation authorization message, the processing circuitry 102 performs step C302, during which it determines if the engine status indicates that the engine 16 is on or off. If the engine status is determined to be off, then the processing circuitry 102 performs step C304 during which it determines if the supply pressure Pₛ is equal to or above a minimal supply pressure threshold Pₛₘᵢₙ. If the supply pressure Pₛ is determined by the processing circuitry 102 to be equal to or above the minimal supply pressure threshold Pₛₘᵢₙ, then the processing circuitry 102 performs step C306, and determines if the trailer connection status indicates that the trailer 14 is connected to the tractor unit 12. If that is the case, the processing circuitry 102 performs step C308 and determines if the trailer load L is below a maximum load threshold Lₘₐₓ. If that is the case, the processing circuitry 102 outputs an inflation authorization message at step 208.

If, at any of steps C302 to C308, the conditions are not met, then the processing circuitry 102 performs step 218 and does not output the inflation authorization message. In some examples, at step 218, the processing circuitry outputs an inflation blocking message. In some examples, including the example represented on figure 4, after step 218, the processing circuitry 102 performs step 220 and outputs an error message. The error message is for example a message sent on an external terminal such as a personal device of the driver, a control center in charge of a fleet of trucks, or is a message displayed on a human-machine interface located in the cab 17. The error message indicates that the automated inflation was not performed. Advantageously, the error message further includes the reason why it was not performed, for example, which condition was not met.

Steps C302 to C308 ensure that the inflation step is performed in an efficient and safe manner. Steps C302 and C308 ensure that there is no risk of the truck moving or being driven away while the inflation process is still ongoing. Step C304 ensures that the air compressor 18 has a supply pressure Pₛ that is above the minimal supply pressure threshold Pₛₘᵢₙ, and therefore high enough to inflate the trailer equipment 20. Step C306 ensures that the inflation step can be properly performed, by checking that the trailer 14 and the tractor unit 12 are connected to each other.

In some examples, any one of steps C302 to C308, or a combination of any step from step C302 to step C308 is performed. They may be performed in any order.

In some examples, in addition to steps C302 to C308, the processing circuitry 102 performs an additional step and determines if the angle of the truck 10, measured by the yaw-rate sensor 44, is above a maximal angle. For example, the maximal angle corresponds to a 10% slope. If that is the case, then the processing circuitry 102 performs step 218 and outputs the inflation blocking message. This ensures that the inflation is not performed when the truck 10 is parked on a slope, which could lead to untimely movement of the truck 10. If the angle of the truck 10 is below the maximal angle and the conditions checked in steps C302 and C308 are met, then the processing circuitry 102 performs step 208 and outputs the inflation authorization message.

After the inflation authorization message is output at step 208, the air compressor 18 receives the inflation authorization message and inflates the trailer equipment 20 at step 210, to increase the trailer equipment pressure P so it is equal to or above a departure pressure threshold P_{d}.

The processing circuitry 102 determines if the trailer equipment pressure P is above or equal to the departure pressure threshold P_{d} at step 212. If the trailer equipment pressure P is below the departure pressure threshold P_{d} then the air compressor 18 performs again step 210 and continues to inflate the trailer equipment 20. If the trailer equipment pressure P is above or equal to the departure pressure threshold P_{d} then the air compressor 18 stops inflating the trailer equipment 20 at step 214.

In some examples, as shown in figure 4, after the air compressor 18 has stopped inflating the trail equipment 20 at step 214, the processing circuitry 102 sends a feedback message indicating successful inflation, at step 216. The feedback message is sent for example to the external terminal, such as the personal device of the driver, to a control center, or is displayed on the human machine interface in the cabin 17.

In some examples, as shown in figure 4, the processing circuitry 102 further receives a manual inflation command at step 206. The manual inflation command is for example sent via a dedicated application, via a gesture, a voice command, or via operating a control, for example located in the cabin 17. In variant, the driver may program a time at which the trailer equipment 20 should start being inflated. In this case, step 208 is directly performed and the inflation authorization message is output by the processing circuitry 102. In the case where a departure message is output, the inflation authorization message is output independently of whether the departure message is output or not by the processing circuitry 102.

In some examples, not represented, after the processing circuitry 102 receives the manual inflation command, it performs steps C302 to C308 as previously described.

In some examples, after or while step 210 is being performed and the air compressor 18 is inflating the trailer equipment 20, the processing circuitry 102 may perform security checks, such as checking that the speed V of the truck 10 is below a maximal speed threshold Vₘₐₓ, at step 211. If step 211 shows that the speed V is below the maximal speed threshold Vₘₐₓ, then step 212 is performed. If step 211 shows that the speed V is equal to or above the maximal speed threshold Vₘₐₓ, then a deflation message is output by the processing circuit 102, and the air compressor 18 decreases the trailer equipment pressure P to become equal to or below a security pressure threshold Pₘᵢₙ at step 213. This ensures that the truck 10 stays immobile while the truck equipment 20 is being inflated. In particular, in the case that the truck equipment 20 includes the parking brakes 24, inflating the truck equipment 20 means unlocking the parking brakes 24, which could potentially cause a security risk, assessed by monitoring the speed V of the vehicle 10 as previously described. When the trailer equipment pressure P is below the security pressure threshold Pₘᵢₙ, the parking brakes 24 are locked, therefore preventing movement of the truck 10.

The departure pressure threshold P_{d}, the security pressure threshold Pₘᵢₙ, the minimal supply pressure threshold Pₛₘᵢₙ, and the maximal speed threshold Vₘₐₓ are advantageously stored in the memory 104 of the computing unit 100.

In some examples, the artificial intelligence model via which the processing unit 102 determines if the truck 10 will depart within the predetermined timeframe is a reinforcement-learning model. The reinforcement-learning model is, for example, trained before it is used in the truck 10. In some examples, the reinforcement-learning model is fine-tuned during its use in the truck 10. For example, if the truck 10 departs within the timeframe determined by the processing circuitry 102, then a reward is received by the reinforcement-learning model. If the departure of the truck 10 is not within the timeframe determined by the processing circuitry 102, the reinforcement-learning model receives a penalty. The reinforcement learning model's accuracy therefore continues to increase after it has started operating, and is specifically tailored to the truck 10 it is integrated to.

In some examples, the processing circuitry 102 determines if the truck 10 will depart within a predetermined timeframe at step 202 by estimating a departure time and calculating if a duration between the departure time and the current time is equal to or below the predetermined timeframe. In this case, step 202 is performed at least once when the truck 10 is parked. This is for example determined by the engine status indicating that the engine 16 has been off for more than five minutes. In other examples, the processing circuitry 102 directly determines if the truck 10 will or will not depart in the predetermined timeframe, and in that case, the determination step 202 may be performed continuously.

**Example 1:** A computer system (100), for inflating a trailer equipment (20) included in a trailer (14), comprising processing circuitry (102) configured to:
- receive data including at least a trailer connection status and a trailer load (L);
- determine if a vehicle (10) comprising the trailer (14) and a tractor unit (12) will depart within a predetermined timeframe, based at least on the trailer connection status and the trailer load (L); and
- if the vehicle (10) is determined to depart within the predetermined timeframe, output an inflation authorization message to increase the trailer equipment pressure (P) to be equal to or above a departure pressure threshold (P_{d}).

**Example 2:** The computer system (100) of example 1, wherein the processing circuitry (102) is further configured to receive a trailer equipment pressure (P) and to send a feedback message indicating successful inflation when the trailer equipment pressure (P) is equal to or above the departure pressure threshold (P_{d}).

**Example 3:** The computer system (100) of any of examples 1 and 2, wherein the processing circuitry (102) is further configured to output the inflation authorization message if:
- the trailer connection status indicates that the trailer is connected to the tractor unit (12) included in the vehicle (10); and
- the trailer load (L) is below a maximum load threshold (Lₘₐₓ).

**Example 4:** The computer system (100) of example 3, wherein the processing circuitry (102) is further configured to:
- receive data including an engine status of an engine (16) included in the tractor unit (12), a location of the vehicle (10), a current time and date, a total drive time before break and a supply pressure (Pₛ);
- determine if the vehicle (10) will depart within the predetermined timeframe further based on the location of the vehicle (10), on the current time and date and on the total drive time before break; and
- output an inflation authorization message if:
   o the engine status of the tractor unit (12) indicates that the engine (16) is off; and
   o the supply pressure (Pₛ) is above or equal to a minimal supply pressure threshold (Pₛₘᵢₙ), in addition to the conditions of example 3 being met.

**Example 5:** The computer system (100) of any of examples 1 to 4, wherein the processing circuitry (102) is configured to determine if the vehicle (10) will depart within the predetermined timeframe by estimating a departure time and calculating if a duration between the departure time and the current time is below or equal to the predetermined timeframe.

**Example 6:** The computer system (100) of any of examples 1 to 5, wherein the processing circuitry (102) is further configured to:
- receive data including a speed (V) of the vehicle (10); and
- if the speed (V) of the vehicle (10) is above or equal to a maximal speed threshold (Vₘₐₓ) after the inflation authorization message has been output, output a deflation message, to decrease the trailer equipment pressure (P) to be equal to or below a security pressure threshold (Pₘᵢₙ).

**Example 7:** The computer system (100) of any of examples 1 to 6, wherein the processing circuitry (102) is further configured to determine if the vehicle (10) will depart within the predetermined timeframe via an artificial intelligence model, the data representative of at least of the trailer connection status and the trailer load (L) being input variables of the artificial intelligence model.

**Example 8:** The computer system (100) of example 7, wherein the artificial intelligence model is a reinforcement-learning model.

**Example 9:** The computer system (100) of any of examples 1 to 8, wherein the processing circuitry (102) is further configured to receive a manual inflation command, and when the manual command is received, output the inflation authorization message.

**Example 10:** A vehicle (10) comprising:
- a trailer (14), comprising trailer equipment (20) configured to be inflated;
- a tractor unit (12), configured to be connected to the trailer (14), the tractor unit (12) comprising a computer system (100) comprising processing circuitry (102) configured to:
   o receive data including at least a trailer connection status and a trailer load (L);
   o determine if the vehicle (10) will depart within a predetermined timeframe based at least on the trailer connection status and the trailer load (L); and
   o if the vehicle (10) is determined to depart within the predetermined timeframe, output an inflation authorization message, the tractor unit (12) further comprising an air compressor (18), configured to inflate the trailer equipment (20) when the inflation authorization message is output to increase a trailer equipment pressure (P) to be equal to or above a departure pressure threshold (P_{d}).

**Example 11:** The vehicle (10) of example 10, wherein the trailer equipment (20) of the trailer comprises park brakes (22).

**Example 12:** The vehicle (10) of example 11, wherein the trailer equipment (20) further comprises service brakes (24) and/or a pneumatic suspension system (26).

**Example 13:** The vehicle of any of examples 10 to 12, wherein the vehicle (10) further comprises:
- a connection sensor (32), configured to determine a connection status of the tractor unit (12) and the trailer (14);
- a load sensor (34), configured to measure a load (L) of the trailer (14);
- a trailer equipment pressure sensor (36), configured to sense the trailer equipment pressure (P); and
- a speed sensor (38), configured to sense a speed (V) of the vehicle (10).

**Example 14:** The vehicle (10) of any of examples 10 to 13, further comprising:
- an engine (16), included in the tractor unit (12);
- an engine sensor (40), configured to determine an engine status of the engine (16); and
- an air supply sensor (42), configured to sense a supply pressure (Pₛ) of the air compressor (18).

**Example 15:** A computer-implemented method, comprising:
- receiving (200) data including at least a trailer connection status of a trailer (14), and a trailer load (L), by processing circuitry (102) of a computer system (100) included in a tractor unit (12);
- determining (202) if a vehicle (10) comprising the trailer (14) and the tractor unit (12) will depart within a predetermined timeframe, based at least on the trailer connection status and the trailer load (L);
- if the vehicle (10) is determined to depart within the predetermined timeframe, outputting (208) an inflation authorization message; and
- when the inflation authorization message is output, inflating (210) a trailer equipment (20) included in the trailer (14) to increase a trailer equipment pressure (P) to be equal to or above a departure pressure threshold (P_{d}) by an air compressor (18) included in the tractor unit (12).

**Example 16:** The method of example 15, further comprising:
- when the trailer equipment pressure (P) is equal to or above the departure pressure threshold (P_{d}), stopping inflation (214) of the equipment by the air compressor (18); and
- sending (216) a feedback message indicating successful inflation, by the processing circuitry (102).

**Example 17:** The method of any of examples 15 and 16, wherein the data received further includes an engine status of an engine (16) of the tractor unit (12), a location of the vehicle (10), a current time and date, a total drive time before break and a supply pressure (Pₛ), by the processing circuitry (102), and wherein the method further comprises:
- determining (202) if the vehicle (10) will depart within the predetermined timeframe further based on the location of the vehicle (10), on the time and date and on the total drive time before break by the processing circuitry (102); and
- outputting (208) an inflation authorization message by the processing circuitry (102) if :
   o the engine status indicates that the engine (16) is off (C302);
   o the supply pressure (Pₛ) is equal to or above a minimal supply pressure threshold (Pₛₘᵢₙ) (C304);
   o the trailer connection status indicates that the trailer (14) is connected to the tractor unit (C306); and
   o the trailer load (L) is below a maximum load threshold (Lₘₐₓ) (C308).

**Example 18:** The method of any of examples 15 to 17, further comprising:
- receiving (206) a manual inflation command by the processing circuitry (102); and
- when the manual inflation command is received, outputting (208) the inflation authorization message.

**Example 19:** A computer program product comprising program code for performing, when executed by the processing circuitry (102), the method of any of examples 15 to 18.

**Example 20:** A non-transitory computer-readable storage medium comprising instructions, which when executed by the processing circuitry (102), causes the processing circuitry (102) to perform the method of any of examples 15 to 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100), for inflating a trailer equipment (20) included in a trailer (14), comprising processing circuitry (102) configured to:
- receive data including at least a trailer connection status and a trailer load (L);
- determine if a vehicle (10) comprising the trailer (14) and a tractor unit (12) will depart within a predetermined timeframe, based at least on the trailer connection status and the trailer load (L); and
- if the vehicle (10) is determined to depart within the predetermined timeframe, output an inflation authorization message to increase a trailer equipment pressure (P) to be equal to or above a departure pressure threshold (P_{d}).

2. The computer system (100) of claim 1, wherein the processing circuitry (102) is further configured to receive a trailer equipment pressure (P) and to send a feedback message indicating successful inflation when the trailer equipment pressure (P) is equal to or above the departure pressure threshold (P_{d}).

3. The computer system (100) of any of claims 1 and 2, wherein the processing circuitry (102) is further configured to output the inflation authorization message if:
- the trailer connection status indicates that the trailer is connected to the tractor unit (12) included in the vehicle (10); and
- the trailer load (L) is below a maximum load threshold (Lₘₐₓ).

4. The computer system (100) of claim 3, wherein the processing circuitry (102) is further configured to:
- receive data including an engine status of an engine (16) included in the tractor unit (12), a location of the vehicle (10), a current time and date, a total drive time before break and a supply pressure (Pₛ);
- determine if the vehicle (10) will depart within the predetermined timeframe further based on the location of the vehicle (10), on the current time and date and on the total drive time before break; and
- output an inflation authorization message if:
o the engine status of the tractor unit (12) indicates that the engine (16) is off; and
o the supply pressure (Pₛ) is above or equal to a minimal supply pressure threshold (Pₛₘᵢₙ), in addition to the conditions of claim 3 being met.

5. The computer system (100) of any of claims 1 to 4, wherein the processing circuitry (102) is further configured to:
- receive data including a speed (V) of the vehicle (10); and
- if the speed (V) of the vehicle (10) is above or equal to a maximal speed threshold (Vₘₐₓ) after the inflation authorization message has been output, output a deflation message, to decrease the trailer equipment pressure (P) to be equal to or below a security pressure threshold (Pₘᵢₙ).

6. The computer system (100) of any of claims 1 to 5, wherein the processing circuitry (102) is further configured to determine if the vehicle (10) will depart within the predetermined timeframe via an artificial intelligence model, the data representative of at least of the trailer connection status and the trailer load (L) being input variables of the artificial intelligence model.

7. A vehicle (10) comprising:
- a trailer (14), comprising trailer equipment (20) configured to be inflated;
- a tractor unit (12), configured to be connected to the trailer (14), the tractor unit (12) comprising a computer system (100) comprising processing circuitry (102) configured to:
o receive data including at least a trailer connection status and a trailer load (L);
o determine if the vehicle (10) will depart within a predetermined timeframe based at least on the trailer connection status and the trailer load (L); and
o if the vehicle (10) is determined to depart within the predetermined timeframe, output an inflation authorization message,
the tractor unit (12) further comprising an air compressor (18), configured to inflate the trailer equipment (20) when the inflation authorization message is output to increase a trailer equipment pressure (P) to be equal to or above a departure pressure threshold (P_{d}).

8. The vehicle (10) of claim 7, wherein the trailer equipment (20) of the trailer comprises park brakes (22).

9. The vehicle of any of claims 7 and 8, wherein the vehicle (10) further comprises:
- a connection sensor (32), configured to determine a connection status of the tractor unit (12) and the trailer (14);
- a load sensor (34), configured to measure a load (L) of the trailer (14);
- a trailer equipment pressure sensor (36), configured to sense the trailer equipment pressure (P); and
- a speed sensor (38), configured to sense a speed (V) of the vehicle (10).

10. The vehicle (10) of any of claims 7 to 9, further comprising:
- an engine (16), included in the tractor unit (12);
- an engine sensor (40), configured to determine an engine status of the engine (16); and
- an air supply sensor (42), configured to sense a supply pressure (Pₛ) of the air compressor (18).

11. A computer-implemented method, comprising:
- receiving (200) data including at least a trailer connection status of a trailer (14), and a trailer load (L), by processing circuitry (102) of a computer system (100) included in a tractor unit (12);
- determining (202) if a vehicle (10) comprising the trailer (14) and the tractor unit (12) will depart within a predetermined timeframe, based at least on the trailer connection status and the trailer load (L);
- if the vehicle (10) is determined to depart within the predetermined timeframe, outputting (208) an inflation authorization message; and
- when the inflation authorization message is output, inflating (210) a trailer equipment (20) included in the trailer (14) to increase a trailer equipment pressure (P) to be equal to or above a departure pressure threshold (P_{d}) by an air compressor (18) included in the tractor unit (12).

12. The method of claim 11, further comprising:
- when the trailer equipment pressure (P) is equal to or above the departure pressure threshold (P_{d}), stopping inflation (214) of the equipment by the air compressor (18); and
- sending (216) a feedback message indicating successful inflation, by the processing circuitry (102).

13. The method of any of claims 11 and 12, wherein the data received further includes an engine status of an engine (16) of the tractor unit (12), a location of the vehicle (10), a current time and date, a total drive time before break and a supply pressure (Pₛ), by the processing circuitry (102),
and wherein the method further comprises:
- determining (202) if the vehicle (10) will depart within the predetermined timeframe further based on the location of the vehicle (10), on the time and date and on the total drive time before break by the processing circuitry (102); and
- outputting (208) an inflation authorization message by the processing circuitry (102) if :
o the engine status indicates that the engine (16) is off (C302);
o the supply pressure (Pₛ) is equal to or above a minimal supply pressure threshold (Pₛₘᵢₙ) (C304);
o the trailer connection status indicates that the trailer (14) is connected to the tractor unit (C306); and
the trailer load (L) is below a maximum load threshold (Lₘₐₓ) (C308).

14. A computer program product comprising program code for performing, when executed by the processing circuitry (102), the method of any of claims 11 to 13.

15. A non-transitory computer-readable storage medium comprising instructions, which when executed by the processing circuitry (102), causes the processing circuitry (102) to perform the method of any of claims 11 to 13.
